# EUROPEAN PATENT SPECIFICATION

(11) **EP 3 873 975 B1**
(45) Date of publication and mention of the grant of the patent: **28.05.2025**
(21) Application number: 19805105.4
(22) Date of filing: 31.10.2019
(51) Int. Cl.: C08J 3/12, C09D 175/08, C08G 18/76, E01C 13/08, C08G 18/48, C08G 18/30, C08G 18/12

(54) **COATED INFILL AND ARTIFICIAL TURF WITH THE COATED INFILL**
BESCHICHTETE FÜLLUNG UND KUNSTRASEN MIT DER BESCHICHTETEN FÜLLUNG
ÉLÉMENT DE REMPLISSAGE REVÊTU ET GAZON ARTIFICIEL AVEC L'ÉLÉMENT DE REMPLISSAGE REVÊTU

(30) Priority: 02.11.2018 IT 201800010011
(43) Date of publication of application: 08.09.2021
(73) Proprietor: Dow Global Technologies LLC, Midland, MI 48674 (US)
(72) Inventor: ASSEMAT, Virginie, 67150 Erstein (FR); BIRCH, Adrian John, 8810 Horgen (CH); GUILLAUME, Emilie, 67150 Erstein (FR); BENVENUTI, Andrea, 42015 Correggio (IT); PRIETO, Miguel A., 8810 Horgen (CH); PLASS, Monika, 8810 Horgen (CH)
(74) Representative: Beck Greener LLP
(86) International application number: PCT/US2019/059152
(87) International publication number: WO 2020/092762

(56) References cited:
- EP-A1- 3 366 838
- EP-A1- 3 366 838

## Description

### Field of Disclosure

The present disclosure relates generally to infill for artificial turf and more specifically to coated infill for use in artificial turf.

### Background

Synthetic or artificial turfs have long been developed to avoid the costs associated with maintaining natural grass athletic playing areas and to improve upon the durability of the playing surfaces. These synthetic turfs or artificial turfs are typically characterized as grass-like, man-made surfaces prepared using synthetic or non-naturally occurring materials. While these turfs have been used in improving athletic play areas such as sporting arenas, they have also been useful in residential, commercial and industrial properties. Synthetic or artificial turfs are often used in recreational areas and common areas for multiunit dwellings. Artificial turfs or synthetic turfs, particularly for playing surfaces, commonly include a grass-like fiber that is tufted into a woven material and coupled to a resinous backing to keep the grass-like fibers in place. A granular, particulate, or pelletized filling agent may be disposed adjacent the fibers as an "infill" intended to orient the fibers upright and provide a level of shock absorbency in the synthetic turf field.

Despite the realized advantages of the synthetic turf fields over natural grass fields, conventional synthetic fields including infill may raise their own unique concerns. Conventional infill, especially infill that has been manufactured using crumb rubber, may cause in higher field surface temperatures (e.g., about 15 °F to 40 °F higher than a natural grass turf at similar ambient and environmental conditions). Thus, there remains a need in the art for improved infill compositions that maintain field coolness and enhance field performance.

### Summary

The present disclosure provides for a coated infill, an artificial turf that includes the coated infill and a method of making the coated infill of the present disclosure. The coated infill of the present disclosure provides for improvements that help to provide exceptional cooling for synthetic turf surfaces. The cooling provided by the coated infill of the present disclosure unexpectedly provides a prolonged cooling affect not seen or expected in the art. Such cooling can help to maintain field coolness and enhance field performance over a longer time as compared to other coated infill.

The present disclosure provides for a coated infill having an infill granule with an exterior coating layer at least partially covering the infill granule, where the exterior coating layer includes a cured hydrophilic polyurethane, and an intermediate coating layer at least partially covering the infill granule, the intermediate coating layer comprising a cured polyurethane, where the cured polyurethane is different than the cured hydrophilic polyurethane and where the intermediate coating layer is positioned between the exterior coating layer and the infill granule, the exterior coating layer being an outermost layer of the coated infill. The coated infill of the present disclosure can be included in an artificial turf, where the artificial turf includes the coated infill of the present disclosure, a primary backing, and artificial turf filaments affixed to the primary backing, where the coated infill is dispersed between the artificial turf filaments affixed to the primary backing.

For the embodiments provided herein, the cured hydrophilic polyurethane can be formed with at least a hydrophilic polyurethane prepolymer component and a curative component. The hydrophilic polyurethane prepolymer component can include at least one polyurethane prepolymer that comprises a reaction product of an isocyanate component and a polyol component. The isocyanate component can be an aromatic diisocyanate. The hydrophilic polyurethane prepolymer component can have a free isocyanate content (%NCO) from 2 weight percent (wt.%) to 12 wt.%. The curative component can include at least water, where no catalyst is required for use as the curative component. The polyol component can also include from 50 wt.% to 100 wt.% of a polyoxyethylene-polyoxypropylene polyol that has a polyoxyethylene content greater than 60 wt.% based on a total weight of the polyoxyethylene-polyoxypropylene polyol.

For the various embodiments, the exterior coating accounts for 1 wt.% to 20 wt.% of a total weight of the coated infill. The polyol component used in forming the at least one polyurethane prepolymer can include from 25 wt.% to 100 wt.% of a polyol having a number average molecular weight of 1000 g/mol to 3000 g/mol. Alternatively, the polyol component used in forming the at least one polyurethane prepolymer can include at least 50 wt.% of a polyether polyol having a number average molecular weight of 6000 g/mol to 9000 g/mol.

The coated infill also includes the cured polyurethane of the intermediate coating layer, which is a reaction product of at least: (a) an isocyanate prepolymer; and (b) water, wherein the isocyanate prepolymer is a reaction product of an isocyanate-reactive composition and an isocyanate. For the various embodiments, the isocyanate used to form the isocyanate prepolymer can be an aromatic diisocyanate, and the isocyanate-reactive composition used to form the isocyanate prepolymer can be selected from the group consisting of a polyether polyol, a polyester polyol and a combination thereof. The infill granule can be selected from the group consisting of rubber compounds, elastomer compounds, thermoplastic compounds, inorganic rigid compounds and organic rigid compounds.

Embodiments of the present disclosure also provide for a method of making the coated infill for artificial turf. The method includes coating infill granules with the isocyanate prepolymer, as provided herein, and curing the isocyanate prepolymer with water to form a cured polyurethane to coat the infill granules. The method further includes coating the cured polyurethane with the hydrophilic polyurethane prepolymer component, as provided herein, and curing the hydrophilic polyurethane prepolymer component with water to form the cured hydrophilic polyurethane, as provided herein. The cured polyurethane is different than the cured hydrophilic polyurethane. In addition, as noted herein the cured polyurethane is positioned between the cured hydrophilic polyurethane and the infill granule, where the cured hydrophilic polyurethane is an outermost layer of the coated infill.

### Brief Description of Drawings

Fig. 1 provides a cutaway view of an example of artificial turf having the coated infill according to the present disclosure.
Fig. 2 provides temperature evaluations of coated infill of Examples and Comparative Examples according to the present disclosure.
Fig. 3 provides temperature evaluations of coated infill of Examples and Comparative Examples according to the present disclosure.

### Detailed Description

The present disclosure provides for a coated infill, an artificial turf that includes the coated infill and a method of making the coated infill of the present disclosure. The coated infill of the present disclosure provides for improvements in coated infills that help to provide exceptional cooling for synthetic turf surfaces, where the cooling provided by the coated infill of the present disclosure unexpectedly provides a prolonged cooling effect not seen or expected in the art. Such cooling can help to maintain field coolness and enhance field performance over a longer time as compared to other coated infill.

The coated infill of the present disclosure includes an infill granule with an exterior coating layer at least partially covers the infill granule, where the exterior coating layer includes a cured hydrophilic polyurethane. The infill granule further includes an intermediate coating layer that also at least partially covering the infill granule, where the intermediate coating layer includes a cured polyurethane. The exterior coating layer is the outermost layer of the coated infill.

As discussed herein, the cured polyurethane of the intermediate coating layer is different than the cured hydrophilic polyurethane of the exterior coating layer. As discussed herein, the intermediate coating layer is positioned between the exterior coating layer and the infill granule. The coated infill can include two or more of the intermediate coating layer, where each of the two or more intermediate coating layers can be formed from the same starting composition or can have at least one of the intermediate coating layer formed from a starting composition that is different than at least a second layer of the two or more intermediate coating layers. When two or more intermediate coating layers are used, each intermediate coating layer can be tailored to achieve a desired result for the infill granule. Examples of such tailoring can include helping to improve the durability and retention of the exterior coating layer on the coated infill granule, helping to improve color, helping to improve the cooling affect provided by the exterior coating layer and/or the overall performance of the coated infill.

Moving from the inside to the outside, the coated infill includes a core in the form of an infill granule. The infill granule may be formed from a variety of materials. Such materials include, but are not limited to, rubber or elastomer compounds, thermoplastic compounds, inorganic rigid compounds and/or organic rigid compounds. Examples of rubber compounds or elastomer compounds include SBR (styrene-butadiene rubber), EPDM (ethylenepropylene-diene monomer), other vulcanized rubbers, thermoplastic elastomers (TPEs) and thermoplastic vulcanizates (TPVs). For example, the rubber compounds or elastomer compounds may include an ethylene/α-olefin/diene interpolymer, an isoprene rubber, a natural rubber, a butadiene rubber, an ethylene/propylene rubber, a silicone rubber and a combination thereof. In embodiments, the infill granule is formed from styrene-butadiene rubber. As used herein, the term "styrene-butadiene copolymer," "styrene-butadiene rubber," or "SBR" means a copolymer manufactured from styrene and 1,3-butadiene monomers. The examples provided herein can be recycled rubber or elastomer compounds, thermoplastic compounds, inorganic rigid compounds and/or organic rigid compounds.

Examples of suitable styrene-butadiene rubbers include, but are not limited to, cold polymerized emulsion SBR and solution polymerized SBR. In various embodiments, the SBR may have a Mooney Viscosity (ML 1+4 at 100 °C) greater than or equal to 10, greater than or equal to 15, or greater than or equal to 20. The SBR may have a Mooney Viscosity (ML 1+4 at 100 °C) less than or equal to 200, less than or equal to 150, or less than or equal to 100. In embodiments, the SBR may have a Mooney Viscosity (ML 1+4 at 100 °C) from 10 to 200, from 15 to 150, or from 20 to 100.

The SBR may be formed from 20 to 100 % by weight, or 40 to 80 % by weight of the 1,3-butadiene monomers. Conversely, the SBR may be formed from 0 to 80 % by weight, or 10 to 50 % by weight of styrene monomers. The SBR may be a random copolymer or block copolymer. In specific embodiments, the copolymer is a random styrene butadiene copolymer. Commercial examples of suitable SBR granules include POWERFILL, available from GommAmica (Italy).

Examples of other rubber compounds or elastomer compounds for the infill granules include styrene-ethylene-butadiene-styrene copolymer (SEBS), black crumb rubber, polychloroprene (neoprene), polyacrylonitrile, poly(styrene-co-butadiene), poly(acrylonitrile-co-butadiene), poly(isobutylene-co-isoprene), polysulfide rubbers, butyl rubber and acryl nitrile butadiene rubber. In other embodiments a cis-1,4-polyisoprene, as natural rubber and trans 1,4-polyisoprene as gutta-percha based infill granule can be used. Additional thermoplastic compounds useful for forming the infill granules include styrene block copolymers. In other embodiments, examples of inorganic rigid compounds and organic rigid compounds for use as the infill granules can include sand (e.g., silica), cork, linoleum, composites made from solidified vegetable oils and wood flour or a hydrogel of methyl-cellulose.

The infill granules can have an average particle size of 0.5 mm to 4 mm, including any average particle size within any sub-range from 0.5 mm to 4 mm. All individual values and subranges of the average particle size from 0.5 mm to 4 mm are included herein and disclosed herein. For example, the average particle size can have a lower value of 0.5 or 1 mm to an upper value of 2, 3, 3.5 or 4 mm. This allows the infill granules to have an average particle size of 1 mm to 4 mm; 2 mm to 4 mm; 0.5 mm to 3.5 mm; 1 mm to 3.5 mm; 2 mm to 3.5 mm; 0.5 mm to 3 mm; 1 mm to 3 mm; or 2 mm to 3 mm, where 0.5 mm to 2 mm is a preferred average particle size range. The infill granules can further include those having a particle size distribution referred to in the FIFA Quality Programme for Football Turf "Handbook of Test Methods" October 2015 Edition, where the particle size distribution of the infill is determined in accordance with EN 933-1.

The intermediate coating layer, as discussed herein, at least partially covers the infill granule. In some embodiments, the intermediate coating layer is a substantially or, in some cases, a completely continuous film that cover at least 50%, at least 60%, at least 70%, at least 80%, at least 90%, or, in some cases, 100% of the surface area of the infill granule. In certain embodiments, the intermediate coating layer can have a maximum film thickness of no more than 100 µm, such as no more than 80 µm, no more than 40µm, no more than 20µm, or, in some cases, no more than 10 µm.

For the various embodiments, the cured polyurethane of the intermediate coating layer is a reaction product of at least (a) an isocyanate prepolymer and (b) water, where the isocyanate prepolymer is a reaction product of an isocyanate-reactive composition and an isocyanate. As appreciated by one skilled in the art, an isocyanate prepolymer is formed by combining an excess of an isocyanate (e.g., a diisocyanate) with an isocyanate-reactive composition (e.g., a polyol), where one of the isocyanate (NCO) groups of the diisocyanate reacts with one of the hydroxyl (OH) groups of the polyol. The other end of the polyol reacts with another diisocyanate, where the resulting isocyanate prepolymer has an isocyanate group on both ends. The isocyanate prepolymer is a diisocyanate itself, but has a greater molecular weight, a higher viscosity, a lower isocyanate content by weight (%NCO), and a lower vapor pressure as compared to the isocyanate used in forming the isocyanate prepolymer. In addition to a diol, a triol or higher functional polyol could also be used for the polyol in the reaction, as long as an excess amount of diisocyanate is used. Molar ratios of diisocyanate to polyol greater than two to one can also be used in forming the isocyanate prepolymer.

One or more of a catalyst, as are known in the art, can be used in the reaction in curing the polyurethane of the intermediate coating layer. Preferably, however, the cured polyurethane of the intermediate coating layer of the present disclosure is formed without the use of such a catalyst.

For the various embodiments, the isocyanate-reactive composition used in forming the isocyanate prepolymer can include a polyol selected from the group consisting of a polyether polyol, a polyester polyol and a combination thereof. For the embodiments, the polyether polyol can include those having at least 2, such as 2 or 3 hydroxyl groups per molecule and may be prepared, for example, by polymerization of epoxides, such as ethylene oxide, propylene oxide, butylene oxide, tetrahydrofuran, styrene oxide or epichlorohyrin, either on their own, in the presence of BF₃, or by a process of chemical addition of these epoxides, optionally as mixtures (such as mixtures of ethylene oxide and propylene oxide) or successively, to starting components having reactive hydrogen atoms, such as water, ammonia, alcohols, or amines. Examples of suitable starting components include ethylene glycol, propylene glycol-(1,3) or - (1,2), glycerol, trimethylolpropane, 4,4'-dihydroxy-diphenylpropane, aniline, ethanolamine or ethylene diamine. Sucrose-based polyether polyols may also be used. It is in many cases preferred to use polyethers which contain predominant amounts of primary OH groups (up to 90%, by weight, based on all the OH groups present in the polyether).

Examples of polyester polyol include those formed as a reaction product of polyhydric, such as dihydric alcohols and/or trihydric alcohols, and polybasic, such as dibasic, carboxylic acids. Instead of free polycarboxylic acids, the corresponding polycarboxylic acid anhydrides or corresponding polycarboxylic acid esters of lower alcohols or mixtures thereof may be used. The polycarboxylic acids may be aliphatic, cycloaliphatic, aromatic and/or heterocyclic and they may be substituted, e.g. by halogen atoms, and/or may be unsaturated. Suitable exemplary polycarboxylic acids include, but are not limited to, succinic acid, adipic acid, suberic acid, azelaic acid, sebacic acid, phthalic acid, isophthalic acid, trimellitic acid, phthalic acid anhydride, tetrahydrophthalic acid anhydride, hexahydrophthalic acid anhydride, tetrachlorophthalic acid anhydride, endomethylene tetrahydrophthalic acid anhydride, glutaric acid anhydride, maleic acid, maleic acid anhydride, fumaric acid, dimeric and trimeric fatty acids, such as oleic acid, optionally mixed with monomeric fatty acids, dimethyl terephthalate and terephthalic acid-bis-glycol esters.

Exemplary suitable polyhydric alcohols include, but are not limited to, ethylene glycol, propylene glycol-(1,2) and -(1,3), butylene glycol-(1,4) and -(2,3), hexanediol-(1,6), octanediol-(1,8), neopentylglycol, cyclohexanedimethanol (1,4-bis-hydroxy-methylcyclohexane ), 2-methyl-1,3-propane-diol, glycerol, trimethylolpropane, hexanetriol-(1 ,2,6), butanetriol-( 1 ,2,4 ), trimethylolethane, pentaerythritol, quinitol, mannitol and sorbitol, methyl glycoside, diethylene glycol, triethylene glycol, tetraethylene glycol, polyethylene glycols, dipropylene glycol, polypropylene glycols, dibutylene glycol and polybutylene glycols. The polyesters may also contain a proportion of carboxyl end groups. Polyesters of lactones, such as s-caprolactone, or hydroxycarboxylic acids, such as co-hydroxycaproic acid, may also be used.

Such isocyanate-reactive composition may also comprise polycarbonate polyols, such as the reaction product of diols, such as propanediol-(1,3), butanediol-(1,4) and/or hexanediol-(1,6), diethylene glycol, triethylene glycol or tetraethylene glycol, with diarylcarbonates, such as diphenylcarbonate, or phosgene.

**In** certain embodiments, the polyols used as the isocyanate-reactive composition can have a number average molecular weight of up to 8,000. Higher number average molecular weight values may also be possible. The number average molecular weight values reported herein are determined by end group analysis, as is known in the art. The polyol can also have a number averaged isocyanate reactive group functionality of 1.6 to 6, such as 2 to 6 or 3 to 5.

**In** the present disclosure, the isocyanate-reactive composition used in forming the isocyanate prepolymer can also include an aromatic diamine, such as those which contain at least one alkyl substituent in the ortho-position to a first amino group and two alkyl substituents in the ortho-position to a second amino group or mixtures thereof. In some embodiments, at least two of the alkyl substituents contain at least two carbon atoms. In certain embodiments, the reactivity of the diamine towards isocyanates has not been reduced by electron attracting substituents, such as halogen, ester, ether or disulphide groups, as is the case, for example, with methylene-bis-chloroaniline (MOCA). In certain embodiments, such diamines do not contain other functional groups reactive with isocyanates. In certain embodiments, the foregoing mentioned alkyl substituent can have as many as twenty carbon atoms and can be straight or branched long chains.

In certain embodiments, the aromatic diamine contains at least one alkyl substituent in the ortho-position to a first amino group and two alkyl substituents having from 1 to 3 carbon atoms in the ortho-position to a second amino group, provided that two of these alkyl substituents contain two or three carbon atoms. Examples of such aromatic diamines include: 1-methyl-3,5-diethyl-2,4-diaminobenzene, 1-methyl-3 ,5-diethyl-2,6-diaminobenzene, 1 ,3,5-triethyl-2,6-diaminobenzene, and 3,5,3',5'-tetraethyl-4,4'-diaminodiphenylmethane.

The above-mentioned aromatic amines may, of course, be used as mixtures with each other or in combination with other active aromatic amines.

In certain embodiments, aromatic diamines which have a linear alkyl substituent having from 1 to 3 carbon atoms in both ortho-positions to each amino group, provided that two of the alkyl substituents contain two or three carbon atoms, are used. In some embodiments, the diamine is liquid at room temperature and miscible with polyols, particularly with polyether polyols. An example of such a compound is 1-methyl-3,5-diethyl-2,4-diaminobenzene or a mixture of this compound with 1-methyl-3,5-diethyl-2,6-diaminobenzene.

In certain embodiments of the present disclosure, the isocyanate-reactive composition can also include aminosilanes, as are known in the art.

For the various embodiments, the isocyanate prepolymer reacts with water to form the cured polyurethane of the intermediate coating layer. Additives such as a polyol could also be used with the isocyanate prepolymer as desired. Examples of the isocyanate used in forming the isocyanate prepolymer include aromatic, aliphatic, and/or cycloaliphatic isocyanates. Aromatic, aliphatic, and/or cycloaliphatic isocyanates can include monomeric organic diisocyanates represented by the formula, R(NCO)₂, where R represents an organic group, such as a divalent aliphatic hydrocarbon group having from 2 to 6 carbon atoms, a divalent cycloaliphatic hydrocarbon group having from 5 to 9 carbon atoms, or a divalent aromatic hydrocarbon group having 5 to 10 carbon atoms.

Examples of suitable diisocyanates used in forming the isocyanate prepolymer include: 1,4-tetra-methylene diisocyanate; 1,6-hexamethylene diisocyanate (HDI); 2,2,4-trimethyl-1,6-hexamethylene diisocyanate; 1,12-dodecamethylene diisocyanate; cyclohexane-1,3-and -1,4-diisocyanate; 1-isocyanato-2-isocyanatomethyl cyclopentane; 1-isocyanato-3-isocyanatomethyl-3,5,5-trimethyl-cyclohexane (isophorone diisocyanate or IPDI), bis-(4-isocyanato-cyclohexyl)-methane; 1,3-and 1,4-bis-(isocyanatomethyl )-cyclohexane; bis-( 4-isocyanatocyclo-hexyl)-methane; 2,4'-diisocyanato-dicyclohexyl methane; bis-(4-isocyanato-3-methyl-cyclohexyl)-methane; α,α,α',α' -tetramethyl-1,3-and/or -1,4-xylylene diisocyanate; 1-isocyanato-1-methyl-4(3)-isocyanatomethyl cyclohexane; 2,4-and/or 2,6-hexahydro-toluylene diisocyanate; 1,3-and/or 1,4-phenylene diisocyanate; 2,4-and/or 2,6-tolune diisocyanate; 2,2-, 2,4- and/or 4,4'-diphenylmethane diisocyanate (MDI) or higher homologs of MDI (polymeric MDI); 1,5-diisocyanato naphthalene; and combinations of any thereof.

Monomeric isocyanates containing three or more isocyanate groups such as 4-isocyanatomethyl-1,8-octamethylene diisocyanate and aromatic polyisocyanates such as 4,4',4"-triphenylmethane triisocyanate and polyphenyl polymethylene polyisocyanates obtained by phosgenating aniline/formaldehyde condensates may also be used in forming the isocyanate prepolymer. Also suitable are isocyanate adducts prepared from monomeric isocyanates and containing isocyanurate, uretdione, biuret, urethane, allophanate, iminooxadiazine dione, carbodiimide, and/or oxadiazinetrione groups. In certain embodiments, the isocyanate has a viscosity, at 25 °C, of no more than 300 mPa·s, when measured using a Brookfield DVE viscometer.

In certain embodiments of the present disclosure, the isocyanate and isocyanate-reactive composition are each used in amounts such that the isocyanate prepolymer produced with the isocyanate and isocyanate-reactive composition has a free isocyanate content (%NCO) from 7 weight percent (wt.%) to 20 wt.%. The free isocyanate content is (%NCO) determined and achieved during production of the isocyanate prepolymer, as known in the art (e.g., by taking the mass due to unreacted NCO groups, divided this mass by the total mass of the isocyanate and isocyanate-reactive composition and then multiplying the result 100 to give the %NCO). The isocyanate prepolymer produced also preferably has a viscosity in the range of 1,000 to 5,000 mPa·s measured at 20 °C using a Brookfield DVE viscometer. The amount of water used in forming the intermediate coating layer is in molar excess of the isocyanate groups available for reaction in the isocyanate prepolymer mixture.

The reaction mixture used in the present disclosure may further include a variety of optional additives, where when present the optional additives may be present in an amount from 0.1 wt.% to 10 wt.% based on a total weight of the reaction mixture. Examples of the optional additives include, but are not limited to, surface-active additives (e.g., emulsifiers) such as the sodium salts of ricinoleic sulphonates or of fatty acids, or salts of fatty acids with amines, such as oleic acid diethylamine or stearic acid diethanolamine, alkali metal or ammonium salts of sulphonic acids, such as dodecylbenzene sulphonic acid or dinaphthylmethane disulphonic acid, or of fatty acids, such as ricinoleic acid, or of polymeric fatty acids, and water-soluble polyether siloxanes that have a polydimethylsiloxane group attached to a copolymer of ethylene oxide and propylene oxide.

The cured polyurethane of the intermediate coating layer can also include one or more of an additive. Examples of such additives include polymeric MDI which can be back blended into the reaction mixture, a pigment, a flame retardant, an antibacterial agent, a thermostabilizing agent, an anti-freeze/deicing additive, paraffins or fatty alcohols or dimethylpolysiloxanes, chain extender, defoamers, rheology additives, a catalyst (amine or metallic), dyes, adhesion promoters, stabilizers against ageing and weathering, plasticizers, fungistatic and bacteriostatic substances and fillers, such as barium sulphate, carbon black or whiting, anti-clumping agents (e.g., silica, such as fumed silica, organic bentonite, hydrogenated castor oil and polyamides up to 20% by weight) may also be used.

Examples of pigments include metal oxides such as iron oxide, iron oxide hydroxide, chromium(III) oxide, a copper phythalocyanine pigment, a nickel azopigment, titanium oxide and combinations thereof. Examples of a flame retardant include aluminum trihydrate, magnesium hydroxide, bis-chloroethylphosphate or ammonium phosphate and polyphosphate, ammonium polyphosphate and/or exfoliated graphite or a mixture hereof.

The exterior coating layer of the present disclosure at least partially covering the infill granule, where the exterior coating layer includes a cured hydrophilic polyurethane. As discussed herein, the cured polyurethane of the intermediate layer is different than the cured hydrophilic polyurethane of the exterior coating. In addition, the intermediate coating layer is positioned between the exterior coating layer and the infill granule such that the exterior coating layer is the outermost layer of the coated infill.

For the various embodiment, the cured hydrophilic polyurethane of the exterior coating layer is formed with at least a hydrophilic polyurethane prepolymer component and a curative component. The hydrophilic polyurethane prepolymer component includes at least one polyurethane prepolymer that includes a reaction product of an isocyanate component that includes diphenylmethane diisocyanate (MDI) and a polyol component, where the hydrophilic polyurethane prepolymer component has a free isocyanate content (%NCO) from 2 wt.% to 12 wt.%. The curative component includes at least water. As used herein, the term "exterior coating" refers to a coating that is formed in a process separate from the introduction of the coated infill into an end use application such as use as a component in the artificial turf surface. In other words, the term exterior coatings means the coating is cured by using at least water as a curative prior to introduction of the coated infill into the end use application.

In various embodiments, the exterior coating on the coated infill retains water for a longer period of time so as to prolong the cooling effect as compared to standard polyurethane coated infill granules and/or uncoated infill granules, by allowing for controlled release of the water. For example, damp, non-coated infill may reach temperatures around 40 °C after 20 minutes under exposure to infrared light. However, according to exemplary embodiments, damp infill with the exterior coating may be able to maintain temperatures under 40 °C for longer periods of time, such as for around 90 minutes under exposure to infrared light. Accordingly, the coated infill having the exterior coating and the intermediate coatings of the present disclosure may prolong the cooling effect associated with water that is applied to the artificial turf, as compared to using standard, uncoated infill.

In various embodiments, the infill granules are coated with a cured hydrophilic polyurethane as the exterior coating, where the cured hydrophilic polyurethane is the reaction product of a hydrophilic polyurethane prepolymer component and a curative component and water. In various embodiments, from 1 wt.% to 20 wt.% of the hydrophilic polyurethane prepolymer component can be used to form the cured hydrophilic polyurethane, based on a total weight of the cured hydrophilic polyurethane. In some embodiments, from 3 wt.% to 12 wt.%, from 3 wt.% to 10 wt.%, or from 5 wt.% to 15 wt.% of the hydrophilic polyurethane prepolymer component is used to form the cured hydrophilic polyurethane of the exterior coating based on a total weight of the cured hydrophilic polyurethane. The hydrophilic polyurethane prepolymer component of various embodiments includes a polyurethane prepolymer that is a reaction product of a composition that includes an isocyanate component (that includes at least diphenylemethane diisocyanate (MDI)) and a polyol component (that includes at least one polyol). The hydrophilic polyurethane prepolymer component includes at least one isocyanate-terminated prepolymer that allows the hydrophilic polyurethane prepolymer component to have a free isocyanate content (%NCO) from 2 weight percent (wt.%) to 12 wt.%. For example, the isocyanate-terminated prepolymer may have a free isocyanate content of from 2 wt.% to 12 wt.%, or from 5 wt.% to 10 wt.%. In some embodiments, a polyisocyanate can be back blended into the polyurethane prepolymer to reach a desired free %NCO content. In other words, polyisocyanate can be added to the polyurethane prepolymer to adjust the %NCO content to the desired level.

In various embodiments, the isocyanate component can be an aromatic diisocyanate. Example of such aromatic diisocyanates include polymeric MDI and/or mixtures of different isomers of MDI, for example, 2,4'-diphenylmethane diisocyanate (2,4' isomer of MDI) and 4,4'-diphenylmethane diisocyanate (4,4' isomer of MDI). The 2,4' and 4,4' isomers of MDI may be present in the isocyanate component in a weight ratio from 1:100 to 50:50. For example, the 2,4' isomer of MDI may be present in an amount from 1 wt.% to 50 wt.% (e.g., 1.25 wt.% to 50 wt.%, 1.3 wt.% to 35 wt.%, 1.5 wt.% to 30 wt.%, etc.), based on a total weight of the isocyanate component. A weight percentage of the 4,4' isomer of MDI may be greater than a weight percentage of the 2,4' isomer of MDI, based on a total weight of the isocyanate component. For example, a formulation for forming the MDI based prepolymer has a 2,4' isomer MDI content from 1.5 wt.% to 40 wt.% (e.g., 1.5 wt.% to 30 wt.%) and a remainder of the 4,4' isomer of MDI based on a total weight of 100 wt.% of the formulation for forming the polyurethane prepolymer. According to some embodiments, a balance of the isocyanate component that is not accounted for with the 4,4' isomer of MDI and/or the 2,4' isomer of MDI may include toluene diisocyanate (TDI), hexamethylene diisocyanate (HDI), isophorone diisocyanate (IIPDI), polymethylene polyphenylisocyanate, carbodiimide or allophonate or uretonimine adducts of methylene diphenylisocyanate and mixtures thereof.

Examples of commercial isocyanates suitable for use in various embodiments include the aromatic isocyanates commercially available under the trademark ISONATE^{™}, such as ISONATE^{™} M125 and ISONATE^{™} 50 O,P', all available from The Dow Chemical Company (Midland, MI).

In various embodiments, the polyol component includes at least one polyether polyol. The polyether polyol used to prepare the polyurethane prepolymer includes one or more polyether polyols and a hydroxyl number of from 10 mg KOH/g to 700 mg KOH/g. In still other embodiments, the polyether polyol composition has a hydroxyl number of from 15 mg KOH/g to 100 mg KOH/g, or from 20 mg KOH/g to 50 mg KOH/g. As used herein, a hydroxyl number is the milligrams of potassium hydroxide equivalent to the hydroxyl content in one gram of the polyol or other hydroxyl compound.

In some embodiments, the polyether polyol composition has an average nominal hydroxyl functionality of from 1.6 to 8. The polyether polyol may have a nominal hydroxyl functionality of from about 2 or greater (e.g., from 2 to 6, from 2 to 5, from 2 to 4, or 2). In some embodiments, the polyol composition has a nominal hydroxyl functionality of from 1.6 to 6, from 1.6 to 4, or from 1.6 to 3.5. By the term "nominal," it is meant the average hydroxyl functionality of the composition with the assumption that the average functionality of the polyol is identical to that average functionality (active hydrogen atoms per molecule) of the initiator as used in the preparation of the polyol. In practice, the average hydroxyl functionality may be somewhat less due to presence of some terminal unsaturation. The polyether polyol may have an average overall hydroxyl functionality of from about 2 to about 4.5 (e.g., 2 to 3.5). As used herein, the hydroxyl functionality (nominal and average overall) is the number of isocyanate reactive sites on a molecule, and may be calculated as the total number of moles of OH over the total number of moles of polyol.

The polyether polyol may have a molecular weight of from 1,000 g/mol to 12,000 g/mol. By the term "molecular weight," it is understood the theoretical molecular weight expressed in grams per mole and being calculated with consideration to the molecular weights and amounts of reactants from which the polyol is prepared. In some embodiments, the polyether polyol composition of various embodiments has a molecular weight of from 1,000 g/mol to 10,000 g/mol, from 2,000 g/mol to 9,000 g/mol, or from 2,500 g/mol to 8,000 g/mol. In some embodiments, the polyol component includes at least 50 wt.% of a polyether polyol having a molecular weight of from 6,000 g/mol to 9,000 g/mol. For example, the polyol component may include from 50 wt.% to 100 wt.%, from 50 wt.% to 90 wt.%, from 50 wt.% to 80 wt.%, from 50 wt.% to 70 wt.%, from 60 wt.% to 100 wt.%, from 60 wt.% to 90 wt.%, from 60 wt.% to 80 wt.%, or from 60 wt.% to 70 wt.% of a polyether polyol having a molecular weight of from 6,000 g/mol to 9,000 g/mol.

In various embodiments, the polyether polyol includes a polyoxyethylene-polyoxypropylene polyol. Combinations of other polyether polyols, including monohydroxyl substances and low molecular weight diol and triol substances or amines, of varying functionality and polyoxyethylene content may be used in the formulation for preparing the polyurethane prepolymer.

According to embodiments, the polyol component includes at least one polyoxyethylene-polyoxypropylene polyol that has a polyoxyethylene content greater than 60 wt.%, greater than 65 wt.%, greater than 70 wt.%, or at least 75 wt.% based on a total weight of the polyoxyethylene-polyoxypropylene polyol. In various embodiments, the polyol component includes from 50 wt.% to 100 wt.% of the polyoxyethylene-polyoxypropylene polyol. A remainder of the weight content of the polyoxyethylene-polyoxypropylene polyol based on a total of 100 wt.% may be accounted for with polyoxypropylene.

For example, the polyoxyethylene-polyoxypropylene polyol may have a polyoxypropylene content of at least 5 wt.% (e.g., at least 10 wt.%, at least 15 wt.%, and/or at least 20 wt.%) and a polyoxyethylene content greater than 60 wt.% or greater than 65 wt.% based on a total weight of the polyoxyethylene-polyoxypropylene polyol. The polyoxyethylene-polyoxypropylene polyol may have an average nominal hydroxyl functionality from 1.6 to 3.5 (e.g., 2.5 to 3.5) and a number average molecular weight from 1,500 g/mol to 8,000 g/mol (e.g., 2,000 g/mol to 6,000 g/mol, 3,000 g/mol to 5,500 g/mol, 4,000 g/mol to 5,300 g/mol, etc.). The polyoxyethylene content of the individual polyols may be randomly distributed throughout the molecule. According to one embodiment, the polyol component consists essentially of the polyoxyethylene-polyoxypropylene polyol, and the polyol component has a polyoxyethylene content greater than 60 wt.%, greater than 65 wt.%, greater than 70 wt.%, or at least 75 wt.% based on a total weight of the polyol component. According to some embodiments, the polyol component includes from 50 wt.% to 100 wt.% of a polyoxyethylene-polyoxypropylene polyol that has polyoxyethylene content greater than 60 wt.%, based on a total weight of the polyoxyethylene-polyoxypropylene polyol.

The polyether polyol used in various embodiments may be produced using standard processes known to those skilled in the art, or may be commercially available. In general, the polyether polyol may be obtained by reacting ethylene oxide and/or propylene oxide simultaneously and/or sequentially in any order with an initiator having 2 to 8 active hydrogen atoms. Such initiators may include water, ethylene glycol, propylene glycol, butanediol, glycerol, trimethyl propane, ethylene diamine, triethanolamine, sucrose and sorbitol.

The polyol component may include one or more polyester polyols having a hydroxyl equivalent weight of at least 500, at least 800, and/or at least 1,000. For example, polyester polyols known in the art for forming polyurethane polymers may be used. The polyol component may include polyols with fillers (filled polyols), e.g., where the hydroxyl equivalent weight is at least 500, at least 800, and/or at least 1,000. The filled polyols may contain one or more copolymer polyols with polymer particles as a filler dispersed within the copolymer polyols. Exemplary filled polyols include styrene/acrylonitrile (SAN) based filled polyols, polyharnstoff dispersion (PHD) filled polyols, and polyisocyanate polyaddition products (PIPA) based filled polyols. The polyol component may include a primary hydroxyl containing alcohol, such as a polybutadiene, a polytetramethylene ether glycol (PTMEG), a polypropylene glycol (PPG), a polyoxypropylene, and/or a polyoxyethylene-polyoxypropylene. In various embodiments, the polyol component includes from 25 wt.% to 100 wt.% of a polyol having a number average molecular weight of from 1,000 g/mol to 3,000 g/mol. Alternatively, the polyol component can include at least 50 wt.% of a polyether polyol having a number average molecular weight of 6000 g/mol to 9000 g/mol.

Alternatively, the polyol component may include one or more commercially available polyols. Exemplary available polyol based products include VORANOL^{™} products, TERAFORCE^{™} Polyol products, VORAPEL^{™} products, SPECFLEX^{™} products, VORALUX^{™} products, PARALOID^{™} products, HYPERLAST^{™} products, VORANOL^{™} VORACTIV^{™} products, UCON^{™} products and SPECFLEX^{™} ACTIV, all of which are available from The Dow Chemical Company.

In embodiments, the polyurethane prepolymer may further include one or more additives, such as, by way of example and not limitation, one or more catalysts, one or more cross-linkers, pigments and/or one or more chain extenders. Other additives known in the art for use in forming prepolymers and polyurethanes may also be employed. For example, a surfactant or a thickening agent may be included. Examples of preferred surfactants are the block copolymers of oxyethylene and oxypropylene such as the Pluronic Polyol surfactants manufactured by BASF. Generally preferred are the non-ionic surfactants such as available under the Pluronic trade name and include the designated products L-62, L-72, L-92, P-75 or P-85. Other surfactants equivalent in nature or performance may be used in place of the mentioned substances.

Examples of pigments include metal oxides such as iron oxide, iron oxide hydroxide, chromium(III) oxide, a copper phythalocyanine pigment, a nickel azopigment, titanium oxide and combinations thereof. Examples of a flame retardant include aluminum trihydrate, magnesium hydroxide, bis-chloroethylphosphate or ammonium phosphate and polyphosphate, ammonium polyphosphate and/or exfoliated graphite or a mixture hereof.

Thickening agents may be present when it is desired to control the viscosity of the polyurethane prepolymer. Examples of thickening agents are natural products such as xanthan gums, or chemical agents such as polyacrylamide polymers and gels as sold by The Dow Chemical Company. Other additives which may also be present include mixing aids, emulsifiers, fatty acids, or other functional additives to modify physical properties of the resulting polymer. Additives, when included, may be present in an amount from 0.1 wt.% to 10 wt.% based on a total weight of the polyurethane prepolymer.

The polyurethane prepolymer is prepared in a conventional way by combining the isocyanate component and the polyol component (e.g., the polyether polyol) at 20 to 100 °C and, in some embodiments, in the presence of urethane-forming catalyst, such as a tertiary amine or tin compound. The relative amounts of the isocyanate component and the polyol component are chosen in such a way as to arrive at the desired free NCO content of the final product. In general, the equivalent amount of diisocyanate will be higher than the equivalent amount of the polyol component.

The coated granules of various embodiments include from 1 wt.% to 20 wt.%, from 1 wt.% to 15 wt.%, from 1 wt.%, to 10 wt.%, from 5 wt.% to 15 wt.%, or from 5 wt.% to 10 wt.% of the hydrophilic polyurethane prepolymer component is used in forming the cured hydrophilic polyurethane, based on a total weight of the cured hydrophilic polyurethane.

Embodiments of the present disclosure also provide for a method of making the coated infill for artificial turf. The method includes coating infill granules with the isocyanate prepolymer, as provided herein, and curing the isocyanate prepolymer and water to form a cured polyurethane to coat the infill granules. The method further includes coating the cured polyurethane with the hydrophilic polyurethane prepolymer component, as provided herein, and curing the hydrophilic polyurethane prepolymer component with water to form the cured hydrophilic polyurethane, as provided herein. The cured polyurethane is different than the cured hydrophilic polyurethane. In addition, as noted herein the cured polyurethane is positioned between the cured hydrophilic polyurethane and the infill granule, where the cured hydrophilic polyurethane is an outermost layer of the coated infill.

In embodiments, a plurality of infill granules are first coated with the isocyanate prepolymer, as provided herein, and curing the isocyanate prepolymer and water to form a cured polyurethane to coat the infill granules. Next, the plurality of infill granules can be coated with the hydrophilic polyurethane prepolymer component, which is cured to form an exterior coating on the plurality of infill granules. In various embodiments, the infill granules are coated with the isocyanate prepolymer of the intermediate layer and the hydrophilic polyurethane prepolymer component of the exterior layer using a mixer. For example, the isocyanate prepolymer is added to a mixer containing the infill granules and mixed until the granules are sufficiently coated. After coating, the isocyanate prepolymer is cured by contacting the coated granules with water. In embodiments, the isocyanate prepolymer is cured by spraying the coated granules with water and agitating the granules to form the intermediate coating on the granules. For example, a batch-type PLOUGHSHARE^{®} mixer (Gebrüder Lödige Maschinenebau GmbH, Germany) or other mixer may be used to agitate the granules while water is sprayed with a discontinuous manual spray or injected into the mixer chamber.

As previously discussed, two or more of the intermediate layers can be formed on the infill granules. In addition, each of the intermediate layer(s) is compositionally different than the cured hydrophilic polyurethane of the exterior coating layer. Each of the two or more intermediate coating layers, when present, can be formed from the same starting composition or can have at least one of the intermediate coating layer formed from a starting composition that is different than at least a second layer of the two or more intermediate coating layers. When two or more intermediate coating layers are used, each intermediate coating layer can be tailored to achieve a desired result for the infill granule. Examples of such tailoring can include helping to improve the durability and retention of the exterior coating layer on the coated infill granule, helping to improve color, helping to improve the cooling affect provided by the exterior coating layer and/or the overall performance of the coated infill.

The method further includes drying the intermediate layer, or layers, prior to coating with the hydrophilic polyurethane prepolymer component of the exterior layer. Water that may remain in the intermediate layer(s) may be used in the reaction of the subsequent composition.

Once the intermediate coating has cured on the infill granules the hydrophilic polyurethane prepolymer component may be added to a mixer containing the infill granules and mixed until the granules are sufficiently coated. Other coating methods may be employed, provided the coating method coats the granules without causing them to stick together. After coating, the polyurethane prepolymer may be cured by contacting the coated granules with a curative component. Suitable curatives include, for example, water or one or more polyols. In various embodiments, the curative component includes at least water. In embodiments, the polyurethane prepolymer may be cured by spraying the coated granules with water and agitating the granules to form the exterior coating on the granules. For example, as discussed above a batch-type PLOUGHSHARE^{®} mixer (Gebrüder Lödige Maschinenebau GmbH, Germany) or other mixer may be used to agitate the granules while water is sprayed with a discontinuous manual spray or injected into the mixer chamber.

Once cured, the coated granules of one or more embodiments described herein may be used as coated infill on an artificial turf surface. In various embodiments, the exterior coating accounts for from 1 wt.% to 20 wt.% of a total weight of the coated infill. In some embodiments, the exterior coating accounts for from 1 wt.% to 15 wt.% or from 1 wt.% to 10 wt.% of a total weight of the coated infill. As discussed herein, the exterior coating layer being an outermost layer of the coated infill.

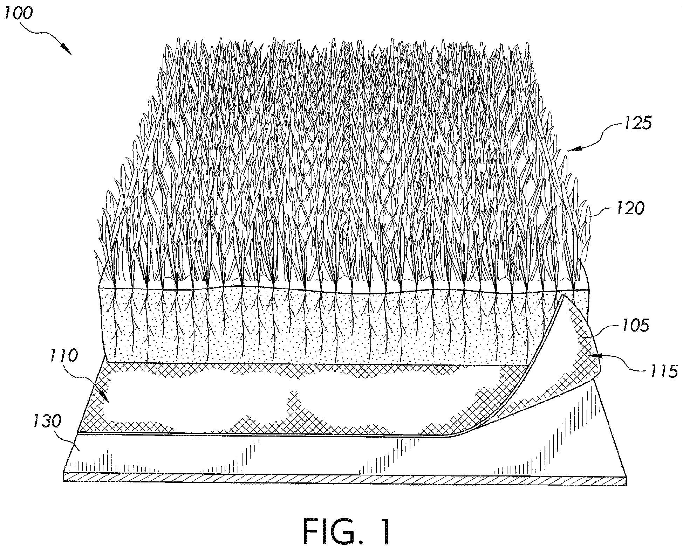

Referring to FIG. 1, depicted is a cutaway view of an artificial turf 100 according to one or more embodiments shown and/or described herein. The artificial turf 100 comprises a primary backing 105 having a top side 110 and a bottom side 115; and at least one artificial turf filament 120. As used herein, "filament" refers to monofilaments, multifilaments, extruded films, fibers, yarns, such as, for example, tape yarns, fibrillated tape yarn, slit-film yarn, continuous ribbon, and/or other stretched fibrous materials used to form synthetic grass blades or strands of an artificial turf.

The at least one artificial turf filament 120 may include a polyolefin, a polyamide, a polyester and a combination thereof. Polyolefins include polymers derived from one or more simple olefin monomers, such as ethylene, propylene, 1-butene, 1-hexene, or 1-octene. The olefin monomers may be substituted or unsubstituted, and if substituted, the substituents may vary depending on the particular embodiment. Suitable polyolefins may include polyethylene, polypropylene, polybutene, polyisoprene, and various interpolymers thereof. As used herein, "interpolymer" refers to polymers prepared by the polymerization of at least two different types of monomers. The term "interpolymer" can include copolymers, which is used to refer to polymers prepared from two different types of monomers, and can also include polymers prepared from more than two different types of monomers. Blends of polyolefins may also be used.

The at least one artificial turf filament 120 is affixed to the primary backing 105 such that the at least one artificial turf filament 120 provides a tufted face 125 extending outwardly from the top side 110 of the primary backing 105. As used herein, "affix," "affixed," or "affixing" includes, but is not limited to, coupling, attaching, connecting, fastening, joining, linking or securing one object to another object through a direct or indirect relationship. The tufted face 125 extends from the top side 110 of the primary backing 105, and can have a cut pile design, where the artificial turf filament loops may be cut, either during tufting or after, to produce a pile of single artificial turf filament ends instead of loops.

The primary backing 105 can include, but is not limited to, woven, knitted, or nonwoven fibrous webs or fabrics made of one or more natural or synthetic fibers or yarns, such as polypropylene, polyethylene, polyamides, polyesters, and rayon. The artificial turf 100 may further comprise a secondary backing 130 bonded to at least a portion of the bottom side 115 of the primary backing 105 such that the at least one artificial turf filament 120 is affixed in place to the bottom side 115 of the primary backing 105. The secondary backing 130 may comprise polyurethane (including, for example, polyurethane supplied under the name ENFORCER^{™} or ENHANCER^{™} available from The Dow Chemical Company) or latex-based materials, such as, styrene-butadiene latex, or acrylates.

The primary backing 105 and/or secondary backing 130 may have apertures through which moisture can pass. The apertures may be generally annular in configuration and are spread throughout the primary backing 105 and/or secondary backing 130. Of course, it should be understood that there may be any number of apertures, and the size, shape and location of the apertures may vary depending on the desired features of the artificial turf 100.

The artificial turf 100 may be manufactured by providing at least one artificial turf filament 120 and affixing the at least one artificial turf filament 120 to a primary backing 105 such that that at least one artificial turf filament 120 provides a tufted face 125 extending outwardly from a top side 110 of the primary backing 105. The artificial turf 100 may further be manufactured by bonding a secondary backing 130 to at least a portion of the bottom side 115 of the primary backing 105 such that the at least one artificial turf filament 120 is affixed in place to the bottom side 115 of the primary backing 105.

The artificial turf 100 may optionally comprise a shock absorption layer underneath the secondary backing of the artificial turf. The shock absorption layer can be made from polyurethane, polyvinyl chloride (PVC) foam plastic or polyurethane foam plastic, a rubber, a closed-cell crosslinked polyethylene foam, a polyurethane under-pad having voids, an elastomer foam of polyvinyl chloride, polyethylene, polyurethane, and/or polypropylene. Nonlimiting examples of a shock absorption layer are the ENFORCER^{™} Sport Polyurethane Systems, and the ENHANCER^{™} Sport Polyurethane Systems (available from The Dow Chemical Company).

The artificial turf 100 further comprises the coated infill as described herein. For example, the coated infill granules described in various embodiments herein are dispersed between the artificial turf filaments 120. The coated infill granules may help the artificial turf filaments 120 remain upright, control temperature, and weigh down the artificial turf 100 to prevent the formation of wrinkles or ripples caused by movement.

The artificial turf 100 may optionally comprise a drainage system. The drainage system allows water to be removed from the artificial turf and prevents the field from becoming saturated with water. Nonlimiting examples of drainage systems include stone-based drainage systems, such as, for example, the EXCELDRAIN^{™} Sheet 100 drainage system, the EXCELDRAIN^{™} Sheet 200 drainage system, and the EXCELDRAIN^{™} EX-T STRIP drainage system (available from American Wick Drain Corp., Monroe, N.C.).

As described above, in various embodiments, the coated infill granules may be used in the artificial turf as described herein. In some embodiments, the artificial turf described herein can be used in forming an athletic field, a playground, a safety surface, a running or walking trail, a landscaping walkway, or an equestrian footing application. The type and volume of the coated infill material, in addition to pile height, tufting density, and yarn strength, may influence the final deformation resistance of the turf. The Lisport test may be used to analyze wear performance, and is helpful to design an effective turf system. Additionally, tests may be performed to analyze temperature performance and aging, as well as the bounce and spin properties of the resulting turf. With regard to each of these properties, turf containing the coated infill as described herein may meet FIFA specifications for the use of the turf in football fields (see, for example, the January 20112 FIFA Quality Concept for Football Turf Handbook of Requirements, the FIFA handbook of test methods and requirements for artificial football turf.

The present disclosure also provides for a coated infill with a hollow infill granule having a wall with a surface that defines a hollow portion in the hollow infill granule, and an exterior coating layer at least partially covering the surface of the wall that defines the hollow portion in the hollow infill granule, the exterior coating layer comprising a cured hydrophilic composition. Examples of such a hollow infill granule include those having a tubular structure, where the wall of the hollow infill granule has both an outer surface and an inner surface, where the inner surface can be opposite the outer surface and the inner surface helps to define the hollow portion of the hollow infill granule. In one embodiment, the hollow infill granule can have an elongate tubular structure (e.g., similar to the shape of macaroni pasta) having a circular cross-sectional profile when taken perpendicularly to a longitudinal axis of the structure. Other cross-sectional profiles are possible, including oval (apart from circular) or polygonal (e.g., square, hexagonal, etc.) shapes.

A variety of processes exist for forming the hollow infill granule of the present disclosure. For example, the hollow infill granule can be formed by an extrusion process, where the hollow infill granule is formed from an extrudable polymeric material such as a synthetic rubber such as ethylene propylene diene terpolymer (EPDM) or styrene-butadiene rubbers (SBR). Examples of EPDM rubbers include those provided in European Patent Application No. 18382612, incorporated herein in its entirety. Other synthetic rubbers and/or other polymers, as provided herein, can be used in forming the hollow infill granule as described herein. Examples of extrusion processes that may find use in the present disclosure include those described in WO 2013/009538 A2 to Koopmans et al. and in WO 2013/096714 A1 to Zalamea Bustillo et al.

As discussed herein, the hollow infill granule having the hollow portion has one or more coatings as provided herein. For example, the cured hydrophilic composition can be the cured hydrophilic polyurethane, as defined herein. The use of other cured hydrophilic compositions are also possible. Any combination of the inner surface and/or the outer surface of the hollow infill granule can be at least partially coated with either the exterior coating layer comprising a cured hydrophilic composition (e.g., such as the cured hydrophilic polyurethane as provided herein) and/or the intermediate coating layer. For example, the cured hydrophilic composition coats an inner surface of the hollow infill granule, where the intermediate coating layer may or may not be present between the cured hydrophilic composition and the inner surface of the hollow infill granule. In an additional example, the inner surface and/or the outer surface of the hollow infill granule can be at least partially coated with the exterior coating layer as provided herein, where the exterior coating layer comprising the cured hydrophilic polyurethane. As disclosed herein, placing the cured hydrophilic polyurethane either on the inner surface and/or encapsulating it in the hollow infill granule may help to improve the abrasion resistance of the coated cured hydrophilic polyurethane and/or prolong its cooling effect. As disclosed herein, it is possible to coextrude a prepolymer composition used in forming the cured hydrophilic composition with the extrudable polymeric material used in forming the hollow infill granule to either at least partially fill the hollow infill granule, as will be discussed more herein, or to at least partially coat the inner surface and/or the outer surface of the hollow infill granule.

Additionally, the inner surface and/or the outer surface of the hollow infill granule can be pretreated before and/or post treated after forming the coated cured hydrophilic polyurethane with known surface modification techniques. Such surface modification techniques include, but are not limited to coronal treatment, atmosphere- and pressure-dependent plasma processing and copolymer grafting techniques, among others.

In addition to providing the one or more coatings as provided herein, the hollow infill granule can also be formed to have one or two open ends, where an open end is defined as an end surface that bridges between the inner surface and the outer surface and helps to define the cross-sectional shape of the hollow infill granule. For example, the wall of the hollow infill granule includes the inner surface, the outer surface opposite the inner surface and a first end surface and a second end surface longitudinally spaced from the first end surface. The first end surface bridges between the inner surface and the outer surface to provide a first opening into the hollow portion in the hollow infill granule and the second end surface bridges between the inner surface and the outer surface to provide a second opening into the hollow portion in the hollow infill granule. Such open ends can be formed by shearing or cutting the hollow infill granule with a cold knife or edge such that an open end, as provided herein, is formed. The hollow infill granule having an open end allows for water to enter into hollow portion of the hollow infill granule where it can contact at least the exterior coating layer comprising the cured hydrophilic polyurethane, as provided herein.

As disclosed herein, after forming at least the exterior coating layer comprising the cured hydrophilic polyurethane on at least the inner surface of the hollow infill granule, the ends (e.g., a first end and a second end) of the hollow infill granule can be sealed to encapsulate the cured hydrophilic polyurethane on at least the inner surface of the hollow infill granule. This structure provides for the inner surface defining an enclosed volume that defines the hollow portion of the coated infill. Alternatively, the hollow infill granule can be at least partially filled with the cured hydrophilic polyurethane after which the ends of the hollow infill granule can be sealed to encapsulate the cured hydrophilic polyurethane in the hollow infill granule. **In** this way the cured hydrophilic composition at least partially fills the enclosed volume that defines the hollow portion of the coated infill. Sealing the ends of the hollow infill granule to encapsulate the cured hydrophilic polyurethane can be accomplished using, for example, a heat seal and cutting machine. In use as a coated infill, water would adsorb through the wall of the hollow infill granule to the cured hydrophilic polyurethane encapsulated therein.

As discussed above, a prepolymer composition used in forming the cured hydrophilic composition can be coated onto at least the inner surface of the hollow infill granule. A variety of coating techniques can be used in coating at least the inner surface of the hollow infill granule. For example, a coextrusion process, as discussed herein, can be used with the extrudable polymeric material in forming the hollow infill granule, where the cured hydrophilic composition at least partially fills the hollow infill granule. For the coextrusion process, a mixture of the hydrophilic polyurethane prepolymer component and water can be introduced into the hollow portion in the hollow infill granule at a position where the temperature inside then hollow portion will not boil the water and is conducive for in situ curing of the hydrophilic polyurethane prepolymer component with the water. Alternatively, during the coextrusion process the hydrophilic polyurethane prepolymer component can be introduced into the hollow portion in the hollow infill granule after which water is allowed to absorb through the wall of the extruded polymeric material to reacts with the hydrophilic polyurethane prepolymer component. The absorbing step may be accomplished by passing the extruded polymeric material having the coextruded hydrophilic polyurethane prepolymer component through a water bath, where the water bath can be heated to promote water adsorption and the curing reaction of the hydrophilic polyurethane prepolymer component with the water.

For the embodiments of the hollow infill granule (not claimed subject-matter), the extrudable polymeric material used in forming the hollow infill granule can optionally be colored and/or pigmented, as described herein. It is also possible to optionally color and/or pigment the cured hydrophilic polyurethane that either coats the inner surface and/or is encapsulated in the hollow infill granule.

### EXAMPLES

The following examples are provided to illustrate various embodiments, but are not intended to limit the scope of the claims. All parts and percentages are by weight based on the total weight of the coated infill unless otherwise indicated. Approximate properties, characters, parameters, *etc.,* are provided below with respect to various working examples, comparative examples, and the materials used in the working and comparative examples. Further, a description of the raw materials used in the examples is as follows.

### Raw Materials

ISONATE^{™} 50 O,P is a diphenylmethane diisocyanate (MDI) based mixture including on average 50 weight percent (wt.%) 4,4'-diphenylmethane diisocyanate and 50 wt.% of 2,4'-diphenylmethane diisocyanate and having an average NCO content of 33.5 wt.% (available from The Dow Chemical Company).

ISONATE^{™} 125M is an MDI based mixture including on average 98 wt.% 4,4'-diphenylmethane diisocyanate and 2 wt.% of 2,4'-diphenylmethane diisocyanate and having an average NCO content of 33.5 wt.% (available from The Dow Chemical Company).

UCON^{™} PCL-270 is a lubricant polyol that is an ethyleneoxide-propyleneoxide copolymer, having an average nominal hydroxyl functionality of 2 and a number average molecular weight of 2,400 g/mol (available from The Dow Chemical Company).

IP 010 Polyol is a glycerin initiated polyoxyethylene-polyoxypropylene polyol having an average nominal hydroxyl functionality of 3 and a number average molecular weight of 7,800 g/mol (available from The Dow Chemical Company).

Benzoyl Chloride - a 99 wt.% solution of benzoyl chloride (available from Sigma-Aldrich).

Styrene-butadiene rubber (SBR) granules available under the tradename POWERFILL^{™}, available from GommAmica (Italy).

COLORTHERM^{®} GREEN GN-M is heat stable, micronized chromium oxide green pigment available from LANXESS^{©}.

### Polyurethane Prepolymer 1 - For Exterior coating layer

Polyurethane Prepolymer 1 (PrePoly 1) is a diphenylmethane diisocyanate (MDI) based prepolymer having a target average isocyanate moiety (NCO) content of 5.4 wt.%. Prepare PrePoly 1 according to the approximate formulation in Table 1, below. The NCO content is measured according to ASTM D5155.

**Table 1 - Polyurethane Prepolymer Formulation 1**

| Compound | Weight Percent (wt.%), based on total weight of polyurethane prepolymer |
|---|---|
| ISONATE^{™} 125M | 22 |
| UCON^{™} PCL-270 | 30 |
| IP 010 Polyol | 48 |
| Benzoyl Chloride | 0.02 |

Prepare PrePoly 1 by adding the amount of polyol(s) seen in Table 1 to a reactor to form a first mixture. Heat the first mixture to 50 °C with continuous stirring and nitrogen purge overnight. The next day, measure the water content of the first mixture to ensure a value of less than 250 ppm. Prepare a second mixture by adding ISONATE^{™} 125M along with Benzoyl Chloride as seen in Table 1 to a four neck flask. Heat the second mixture to 50 °C with continuous stirring. Add the first mixture to the second mixture and heat the resultant mixture to 75 °C and maintain the temperature of 75 °C for three hours to form PrePoly 1. Thereafter, allow the temperature of PrePoly 1 to return to room temperature (23 °C).

### Intermediate coating layer

The intermediate coating layer is formed with VORAMER^{™} RF 1024 Isocyanate having a viscosity of about 3,000 mPa·s at 20 °C and a mean NCO% of approximately 14.8%, available from The Dow Chemical Company.

### Coating Layer Examples

Table 3 below lists the formulations of the Exterior coating layer and the Intermediate coating layer for Comparative Examples A-C and Examples 1-2. Comparative Examples A and B (CE A, CE B) provide only one coating layer of either the Exterior coating layer (cured PrePoly 1) or the Intermediate coating layer, respectively. Comparative Example C provides two coating layers of the Intermediate coating layer. Examples 1-2 (Ex 1 and Ex 2) are embodiments of the present disclosure that include the Exterior coating layer of the cured hydrophilic polyurethane (cured PrePoly 1) and the Intermediate coating layer covering the SBR infill granule. The amounts reported in Table 3 represent the wt.% of each component before curing.

**Table 3 - Coated Infill Examples (EX) and Comparative Examples (CE)**

| | | **CE A** | **CE B** | **CE C** | **EX 1** | **EX 2** |
|---|---|---|---|---|---|---|
| SBR Granules | | 89 | 89 | 84 | 78 | 81 |
| Intermediate coating layer | | RF 1024 | PrePoly 1 | RF 1024 | RF 1024 | RF 1024 |
| | %wt | 9 | 9 | 6 | 9 | 6 |
| | | COLORTHERM GREEN GN-M | | | | |
| | %wt | 2 | 2 | 2 | 2 | 2 |
| Exterior coating layer | | - | - | RF 1024 | PrePoly 1 | PrePoly 1 |
| | %wt | - | - | 6 | 9 | 9 |
| | | - | - | COLORTHERM GREEN GN-M | | |
| | %wt | - | - | 2 | 2 | 2 |

Prepare the coated infill granules of each of Comparative Examples A-C and Examples 1-2 by loading the SBR granules into a horizontal Continuous Ploughshare Mixer (Gebrüder Lödige Maschinenbau GmbH, Germany). For each of Examples 1-2 and Comparative Examples A-C, pour the composition for forming the Intermediate coating layer seen in Table 3 into the mixer in the amounts reported in Table 3 and mix for 5 minutes at 180 rpm. Add the COLORTHERM^{®} GREEN GN-M to each of Examples 1-2 and Comparative Examples A-C in the amount reported in Table 3. Next, spray water onto the coated SBR granules to allow the Intermediate coating layer to cure while mixing at 180 rpm for 45 minutes.

Next, for each of Examples 1-2 pour the composition for forming the Exterior coating layer seen in Table 3 into the mixer in the amounts reported in Table 3 and mix for 5 minutes at 180 rpm. Add the COLORTHERM^{®} GREEN GN-M to each of Examples 1-2 in the amount reported in Table 3. Next, spray water onto the coated SBR granules to allow the Exterior coating layer to cure while mixing at 180 rpm. Stop mixing when the coated infill granules are fully dry, tack free when gently compressed by hand.

Unload the coated infill granules for Comparative Examples A-C and Examples 1-2 and store for a minimum of 24 hours prior to testing.

### Cooling Performance Testing

For cooling performances, test Comparative Examples A-C and Examples 1-2 to evaluate surface temperature rise when exposed to infrared lamps as follows. Evenly distribute 571 grams of each of the coated infill granules of Examples 1-2 and Comparative Examples A, B and C in a 30x20 cm² tray having 70 evenly distributed 1 mm holes and lined with a non-woven textile permeable to water to facilitate drainage and limit water stagnation under the coated infill granules. Wet the coated infill granules of each Example and Comparative Example with a sprinkler head dispensing 10 L/m² for the given area of the tray. After wetting, allow the coated infill granules of each Example and Comparative Example to drain for 15 minutes. Expose the coated infill granules of Examples 1-2 and Comparative Examples A, B and C to two 275 Watt IR lamps poisoned 62.4 cm from the exposed surface of the coated infill granules. Monitor the temperature on the exposed surface of the coated infill granules over three hours using an IR thermometer.

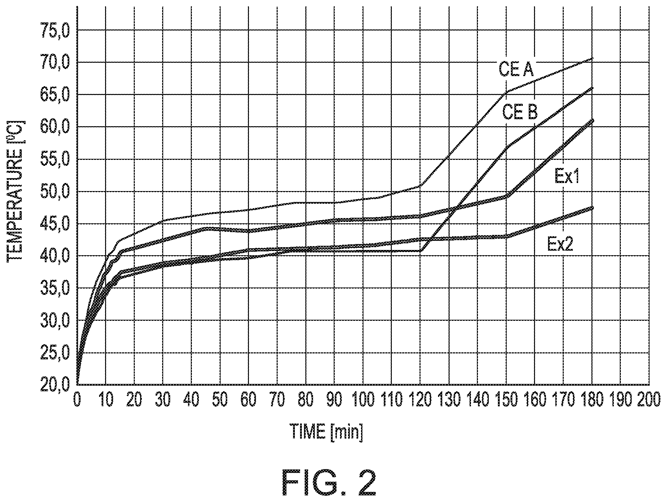

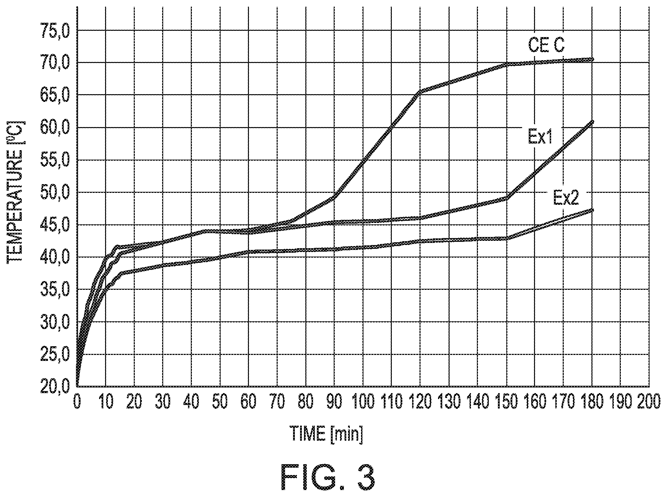

FIGS. 2 and 3 show the results of the temperature evaluation. In particular, FIG. 2 is a graph depicting the temperature (in °C) as a function of time (in minutes) of exposure to IR. As shown in FIG. 2, a difference (ΔT) of about 5 °C is observed between the coated granules of Example 1 and Comparative Example A, where Comparative Example A included only the cured polyurethane layer, which was used as the intermediate coating layer for Example 1. Example 1, however, further includes the exterior coating layer of the hydrophilic polyurethane as discussed above. As seen in Fig. 2, the use of the hydrophilic polyurethane as the exterior coating layer over the intermediate coating layer of Examples 1 and 2 highlights that the double coating of the granules with a top layer of hydrophilic coating allows extending the cooling performances of a pre-wetted infill. It was also found that this extended cooling effect was not seen for the infill granules of Comparative Example A that had received an exterior coating layer (9 wt.%) of the VORAMER^{™} RF 1024.

FIGS. 2 and 3 also surprisingly show that the coated infill granules of Examples 1-2 have an extended cooling effect as compared to a single hydrophilic layer (Comparative Example B) or two coating layer of the Intermediate coating layer (Comparative Example C). This prolonged effect is unexpectedly improved with a lower level of the cured polyurethane of the intermediate coating layer (e.g., 6 wt.%) as compared to 9 wt.% of the cured polyurethane of the intermediate coating layer for the same level of the cured hydrophilic polyurethane of the exterior coating layer (9 wt.%).

### Wear Performance

Conduct the Lisport wear test on the coated infill granules of Comparative Examples A and B and Examples 1-2. Expose samples of each of Comparative Examples A and B and Examples 1-2 to 20000 cycles on a Lisport wear tester (DelTec Equipment, The Netherlands). A quantification of the % surface covered after the wearing performance of the various granules of interest is conducted as follows. Qualification is performed using a light microscopic image on a Keyence digital microscope VHX 5000 in the reflectance mode. Using a 100x objective the magnification was adapted to the size of the granulates. In order to get sharp images on the entire surface of the uneven granulates pictures were accumulated with varying z-direction. The black-green contrast (black from the infill granules and green from the COLORTHERM^{®} GREEN GN-M pigment) was used for the quantification of the coating level. In order to obtain representative data at least 20 different granulates of each sample were analyzed in this way and the average data are reported as well as the separate measurements.

Measure the percent (%) coverage of green versus black on of the visible surface of the 20 different granulates for each of Examples 1 and 2 and Comparative Examples A and B before and after the wearing test Lisport. The analysis of the image calculates the level of green surface area vs total surface area of the granulate. Green is defined by the specific wavelength region in the visible spectrum (400 to 765 nm). The Average percent (%) coverage measured is provided for the different coated infills. A ranking is used in reporting the data, where a ranking of 1 indicates the highest average percent coverage and a ranking of 3 indicates the lowest average percent coverage. The results as seen in Table 4, wherein the error of the measurement for the average % coverage is less than about + 5%.

**Table 4**

| **Average % green pigment coating** | **Ranking** | | **Infill type** | **Quality** | **Average % coverage** | **Ranking** |
|---|---|---|---|---|---|---|
| **0-75** | **3** | | **CE A** | **New** | **95** | **2** |
| **75 - 95** | **2** | | | **Worn** | **80** | **2** |
| **>95** | **1** | | **CE B *** | **New** | **88** | **2** |
| | | | | **Worn** | **69** | **3** |
| | | | **EX 1** | **New** | **84** | **2** |
| | | | | **Worn** | **81** | **2** |
| | | | **EX 2** | **New** | **83** | **2** |
| | | | | **Worn** | **84** | **2** |

| | | | | | | |
|---|---|---|---|---|---|---|
| * Stopped before 20000 cycles | | | | | | |

As seen in Table 4, the coated infill retains at least 95 percent of a combination of the exterior coating layer and the intermediate coating layer after 20000 cycles on a Lisport wear tester as determined using comparative visual inspection, as discussed herein. In addition, the Examples of the coated infill granules also provide for the extended cooling effect (as discussed above) along with color retention as demonstrated in Table 4.

## Claims

1. A coated infill, comprising:
an infill granule;
an exterior coating layer at least partially covering the infill granule, the exterior coating layer comprising a cured hydrophilic polyurethane; and
an intermediate coating layer at least partially covering the infill granule, the intermediate coating layer comprising a cured polyurethane, wherein the cured polyurethane is different than the cured hydrophilic polyurethane and wherein the intermediate coating layer is positioned between the exterior coating layer and the infill granule, the exterior coating layer being an outermost layer of the coated infill.

2. The coated infill of claim 1, wherein the cured hydrophilic polyurethane is formed with at least a hydrophilic polyurethane prepolymer component and a curative component, wherein:
the hydrophilic polyurethane prepolymer component includes at least one polyurethane prepolymer that comprises a reaction product of an isocyanate component and a polyol component, the hydrophilic polyurethane prepolymer component having a free isocyanate content (%NCO) from 2 weight percent (wt.%) to 12 wt.%; and
the curative component includes at least water;
wherein the polyol component includes from 50 wt.% to 100 wt.% of a polyoxyethylene-polyoxypropylene polyol that has a polyoxyethylene content greater than 60 wt.% based on a total weight of the polyoxyethylene-polyoxypropylene polyol.

3. The coated infill of claim 2, wherein the isocyanate component is an aromatic diisocyanate; or
wherein the polyol component includes from 25 wt.% to 100 wt.% of a polyol having a number average molecular weight of 1000 g/mol to 3000 g/mol; or wherein the polyol component includes at least 50 wt.% of a polyether polyol having a number average molecular weight of 6000 g/mol to 9000 g/mol, wherein the number average molecular weight is determined according to the description.

4. The coated infill of any one of claims 1-3, wherein the exterior coating layer accounts for 1 wt.% to 20 wt.% of a total weight of the coated infill; or
wherein the cured polyurethane of the intermediate coating layer is a reaction product of at least:
(a) an isocyanate prepolymer; and
(b) water, wherein the isocyanate prepolymer is a reaction product of an isocyanate-reactive composition and an isocyanate.

5. The coated infill of claim 4, wherein the isocyanate is an aromatic diisocyanate, and the isocyanate-reactive composition is selected from the group consisting of a polyether polyol, a polyester polyol and a combination thereof.

6. The coated infill of any one of claims 1-5, wherein the infill granule is selected from the group consisting of rubber compounds, elastomer compounds, thermoplastic compounds, inorganic rigid compounds and organic rigid compounds; or
wherein the coated infill retains at least 95 percent of a combination of the exterior coating layer and the intermediate coating layer after 20000 cycles on a Lisport wear tester as determined using comparative visual inspection.

7. An artificial turf, comprising:
a coated infill on any one of claims 1-6;
a primary backing; and
artificial turf filaments affixed to the primary backing, wherein the coated infill is dispersed between the artificial turf filaments affixed to the primary backing.

8. A method of making a coated infill for artificial turf, comprising:
coating infill granules with an isocyanate prepolymer;
curing the isocyanate prepolymer with water to form a cured polyurethane to coat the infill granules;
coating the cured polyurethane with a hydrophilic polyurethane prepolymer component; and
curing the hydrophilic polyurethane prepolymer component with water to form a cured hydrophilic polyurethane, wherein the cured polyurethane is different than the cured hydrophilic polyurethane and wherein the cured polyurethane is positioned between the cured hydrophilic polyurethane and the infill granule, the cured hydrophilic polyurethane being an outermost layer of the coated infill.

9. The method of claim 8, wherein the hydrophilic polyurethane prepolymer component includes at least one polyurethane prepolymer that comprises a reaction product of an isocyanate component and a polyol component, the hydrophilic polyurethane prepolymer component having a free isocyanate content (%NCO) from 2 weight percent (wt.%) to 12 wt.%.

10. The method of claim 9, wherein the polyol component includes from 50 wt.% to 100 wt.% of a polyoxyethylene-polyoxypropylene polyol that has a polyoxyethylene content greater than 60 wt.% based on a total weight of the polyoxyethylene-polyoxypropylene polyol; or
wherein the polyol component includes from 25 wt.% to 100 wt.% of a polyol having a number average molecular weight of 1000 g/mol to 3000 g/mol; or wherein the polyol component includes at least 50 wt.% of a polyether polyol having a number average molecular weight of 6000 g/mol to 9000 g/mol, wherein the number average molecular weight is determined according to the description.

11. The method of claim 10, wherein the exterior coating layer accounts for 1 wt.% to 20 wt.% of a total weight of the coated infill.

## Patentansprüche

1. Beschichtete Füllung, umfassend:
ein Füllgranulat;
eine äußere Beschichtungsschicht, die das Füllgranulat mindestens teilweise bedeckt, die äußere Beschichtungsschicht umfassend ein ausgehärtetes hydrophiles Polyurethan; und
eine Zwischenbeschichtungsschicht, die das Füllgranulat mindestens teilweise bedeckt, die Zwischenbeschichtungsschicht umfassend ein ausgehärtetes Polyurethan, wobei sich das ausgehärtete Polyurethan von dem ausgehärteten hydrophilen Polyurethan unterscheidet und wobei die Zwischenbeschichtungsschicht zwischen der äußeren Beschichtungsschicht und dem Füllgranulat positioniert ist, wobei die äußere Beschichtungsschicht eine äußerste Schicht der beschichteten Füllung ist.

2. Beschichtete Füllung nach Anspruch 1, wobei das ausgehärtete hydrophile Polyurethan aus mindestens einer hydrophilen Polyurethanprepolymerkomponente und einer Aushärtungskomponente ausgebildet ist, wobei:
die hydrophile Polyurethanprepolymerkomponente mindestens ein Polyurethanprepolymer einschließt, das ein Reaktionsprodukt aus einer Isocyanatkomponente und einer Polyolkomponente umfasst, wobei die hydrophile Polyurethanprepolymerkomponente einen freien Isocyanatgehalt (%NCO) von 2 Gewichtsprozent (Gew.-%) bis 12 Gew.-% aufweist; und
die Aushärtungskomponente mindestens Wasser einschließt;
wobei die Polyolkomponente von zu 50 Gew.-% bis 100 Gew.-% ein Polyoxyethylen-Polyoxypropylen-Polyol einschließt, das einen Polyoxyethylengehalt von mehr als 60 Gew.-% aufweist, bezogen auf ein Gesamtgewicht des Polyoxyethylen-Polyoxypropylen-Polyols.

3. Beschichtete Füllung nach Anspruch 2, wobei die Isocyanatkomponente ein aromatisches Diisocyanat ist; oder
wobei die Polyolkomponente von 25 Gew.-% bis 100 Gew.-% ein Polyol, das ein zahlenmittleres Molekulargewicht von 1000 g/mol bis 3000 g/mol aufweist, einschließt; oder wobei die Polyolkomponente zu mindestens 50 Gew.-% ein Polyetherpolyol, das ein zahlenmittleres Molekulargewicht von 6000 g/mol bis 9000 g/mol aufweist, einschließt, wobei das zahlenmittlere Molekulargewicht gemäß der Beschreibung bestimmt wird.

4. Beschichtete Füllung nach einem der Ansprüche 1 bis 3, wobei die äußere Beschichtungsschicht zu 1 Gew.-% bis 20 Gew.-% eines Gesamtgewichts der beschichteten Füllung ausmacht; oder
wobei das ausgehärtete Polyurethan der Zwischenbeschichtungsschicht ein Reaktionsprodukt ist aus mindestens:
(a) einem Isocyanatprepolymer; und
(b) Wasser, wobei das Isocyanatprepolymer ein Reaktionsprodukt aus einer isocyanatreaktiven Zusammensetzung und einem Isocyanat ist.

5. Beschichtete Füllung nach Anspruch 4, wobei das Isocyanat ein aromatisches Diisocyanat ist und die isocyanatreaktive Zusammensetzung aus der Gruppe ausgewählt ist, bestehend aus einem Polyetherpolyol, einem Polyesterpolyol und einer Kombination davon.

6. Beschichtete Füllung nach einem der Ansprüche 1 bis 5, wobei das Füllgranulat aus der Gruppe ausgewählt ist, bestehend aus Gummiverbindungen, Elastomerverbindungen, thermoplastischen Verbindungen, anorganischen starren Verbindungen und organischen starren Verbindungen; oder
wobei die beschichtete Füllung nach 20.000 Zyklen auf einem Lisport-Verschleißtestgerät mindestens 95 Prozent einer Kombination aus der äußeren Beschichtungsschicht und der Zwischenbeschichtungsschicht beibehält, wie unter Verwendung vergleichender Sichtprüfung bestimmt.

7. Kunstrasen, umfassend:
eine beschichtete Füllung nach einem der Ansprüche 1 bis 6;
eine primäre Unterlage; und
Kunstrasenfilamente, die an der primären Unterlage befestigt sind, wobei die beschichtete Füllung zwischen den Kunstrasenfilamenten, die an der primären Unterlage befestigt sind, verteilt ist.

8. Verfahren zum Herstellen einer beschichteten Füllung für Kunstrasen, umfassend:
Beschichten von Füllgranulaten mit einem Isocyanatprepolymer;
Aushärten des Isocyanatprepolymers mit Wasser, um ein ausgehärtetes Polyurethan auszubilden, um die Füllgranulate zu beschichten;
Beschichten des ausgehärteten Polyurethans mit einer hydrophilen Polyurethanprepolymerkomponente; und
Aushärten der hydrophilen Polyurethanprepolymerkomponente mit Wasser, um ein ausgehärtetes hydrophiles Polyurethan auszubilden, wobei sich das ausgehärtete Polyurethan von dem ausgehärteten hydrophilen Polyurethan unterscheidet und wobei das ausgehärtete Polyurethan zwischen dem ausgehärteten hydrophilen Polyurethan und dem Füllgranulat positioniert ist, wobei das ausgehärtete hydrophile Polyurethan eine äußerste Schicht der beschichteten Füllung ist.

9. Verfahren nach Anspruch 8, wobei die hydrophile Polyurethanprepolymerkomponente mindestens ein Polyurethanprepolymer einschließt, das ein Reaktionsprodukt aus einer Isocyanatkomponente und einer Polyolkomponente umfasst, wobei die hydrophile Polyurethanprepolymerkomponente einen freien Isocyanatgehalt (%NCO) von 2 Gewichtsprozent (Gew.-%) bis 12 Gew.-% aufweist.

10. Verfahren nach Anspruch 9, wobei die Polyolkomponente von zu 50 Gew.-% bis 100 Gew.-% ein Polyoxyethylen-Polyoxypropylen-Polyol einschließt, das einen Polyoxyethylengehalt von mehr als 60 Gew.-% aufweist, bezogen auf ein Gesamtgewicht des Polyoxyethylen-Polyoxypropylen-Polyols; oder
wobei die Polyolkomponente von 25 Gew.-% bis 100 Gew.-% ein Polyol, das ein zahlenmittleres Molekulargewicht von 1000 g/mol bis 3000 g/mol aufweist, einschließt, oder wobei die Polyolkomponente zu mindestens 50 Gew.-% ein Polyetherpolyol, das ein zahlenmittleres Molekulargewicht von 6000 g/mol bis 9000 g/mol aufweist, einschließt, wobei das zahlenmittlere Molekulargewicht gemäß der Beschreibung bestimmt wird.

11. Verfahren nach Anspruch 10, wobei die äußere Beschichtungsschicht zu 1 Gew.-% bis 20 Gew.-% eines Gesamtgewichts der beschichteten Füllung ausmacht.

## Revendications

1. Remplissage revêtu, comprenant :
un granulé de remplissage ;
une couche de revêtement extérieur recouvrant au moins partiellement le granulé de remplissage, la couche de revêtement extérieur comprenant un polyuréthane hydrophile durci ; et
une couche de revêtement intermédiaire recouvrant au moins partiellement le granulé de remplissage, la couche de revêtement intermédiaire comprenant un polyuréthane durci, dans lequel le polyuréthane durci est différent du polyuréthane hydrophile durci et dans lequel la couche de revêtement intermédiaire est positionnée entre la couche de revêtement extérieure et le granulé de remplissage, la couche de revêtement extérieure étant la couche la plus externe du remplissage revêtu.

2. Remplissage revêtu selon la revendication 1, dans lequel le polyuréthane hydrophile durci est formé d'au moins un composant prépolymère de polyuréthane hydrophile et d'un composant de durcissement, dans lequel :
le composant prépolymère de polyuréthane hydrophile comporte au moins un prépolymère de polyuréthane qui comprend un produit de réaction d'un composant isocyanate et d'un composant polyol, le composant prépolymère de polyuréthane hydrophile ayant une teneur en isocyanate libre (%NCO) comprise entre 2 % en poids (% en poids) et 12 % en poids ; et
le composant curatif comporte au moins de l'eau ;
dans lequel le composant polyol comporte de 50 % en poids à 100 % en poids d'un polyol polyoxyéthylène-polyoxypropylène dont la teneur en polyoxyéthylène est supérieure à 60 % en poids par rapport au poids total du polyol polyoxyéthylène-polyoxypropylène.

3. Remplissage revêtu selon la revendication 2, dans lequel le composant isocyanate est un diisocyanate aromatique ; ou
dans lequel le composant polyol comporte de 25 % en poids à 100 % en poids d'un polyol ayant un poids moléculaire moyen en nombre de 1000 g/mol à 3000 g/mol ; ou dans lequel le composant polyol comporte au moins 50 % en poids d'un polyol de polyéther ayant un poids moléculaire moyen en nombre de 6000 g/mol à 9000 g/mol, dans lequel le poids moléculaire moyen en nombre est déterminé conformément à la description.

4. Remplissage revêtu selon l'une quelconque des revendications 1 à 3, dans lequel la couche de revêtement extérieur représente de 1 % en poids à 20 % en poids du poids total du remplissage revêtu ; ou
dans lequel le polyuréthane durci de la couche de revêtement intermédiaire est un produit de réaction d'au moins :
(a) un prépolymère d'isocyanate ; et
(b) de l'eau, dans lequel le prépolymère isocyanate est un produit de réaction d'une composition réactive à l'isocyanate et d'un isocyanate.

5. Remplissage revêtu selon la revendication 4, dans lequel l'isocyanate est un diisocyanate aromatique, et la composition réactive à l'isocyanate est choisie dans le groupe constitué d'un polyol de polyéther, un polyol de polyester et une combinaison de ceux-ci.

6. Remplissage revêtu selon l'une quelconque des revendications 1 à 5, dans lequel le granulé de remplissage est choisi dans le groupe constitué de composés de caoutchouc, composés d'élastomère, composés thermoplastiques, composés rigides inorganiques et composés rigides organiques ; ou
dans lequel le remplissage revêtu conserve au moins 95 pour cent d'une combinaison de la couche de revêtement extérieure et de la couche de revêtement intermédiaire après 20000 cycles sur un testeur d'usure Lisport, tel que déterminé par une inspection visuelle comparative.

7. Gazon artificiel comprenant :
un remplissage revêtu selon l'une quelconque des revendications 1 à 6 ;
un support primaire ; et
des filaments de gazon artificiel fixés au support primaire, dans lequel le remplissage revêtu est dispersé entre les filaments de gazon artificiel fixés au support primaire.

8. Procédé de fabrication d'un remplissage revêtu pour gazon artificiel, comprenant :
des granulés de remplissage revêtu d'un prépolymère isocyanate ;
le durcissement du prépolymère isocyanate avec de l'eau pour former un polyuréthane durci destiné à revêtir les granulés de remplissage ;
le revêtement du polyuréthane durci d'un composant prépolymère de polyuréthane hydrophile ; et
le durcissement du composant prépolymère polyuréthane hydrophile avec de l'eau pour former un polyuréthane hydrophile durci, dans lequel le polyuréthane durci est différent du polyuréthane hydrophile durci et dans lequel le polyuréthane durci est positionné entre le polyuréthane hydrophile durci et le granule de remplissage, le polyuréthane hydrophile durci étant une couche externe du remplissage revêtu.

9. Procédé selon la revendication 8, dans lequel le composant prépolymère de polyuréthane hydrophile comporte au moins un prépolymère de polyuréthane qui comprend un produit de réaction d'un composant isocyanate et d'un composant polyol, le composant prépolymère de polyuréthane hydrophile ayant une teneur en isocyanate libre (%NCO) de 2 pour cent en poids (% en poids) à 12 % en poids.

10. Procédé selon la revendication 9, dans lequel le composant polyol comporte de 50 % en poids à 100 % en poids d'un polyol de polyoxyéthylène-polyoxypropylène qui a une teneur en polyoxyéthylène supérieure à 60 % en poids par rapport au poids total du polyol de polyoxyéthylène-polyoxypropylène ; ou
dans lequel le composant polyol comporte de 25 % en poids à 100 % en poids d'un polyol ayant un poids moléculaire moyen en nombre de 1000 g/mol à 3000 g/mol ; ou dans lequel le composant polyol comporte au moins 50 % en poids d'un polyol de polyéther ayant un poids moléculaire moyen en nombre de 6000 g/mol à 9000 g/mol, dans lequel le poids moléculaire moyen en nombre est déterminé conformément à la description.

11. Procédé selon la revendication 10, dans lequel la couche de revêtement extérieur représente de 1 % en poids à 20 % en poids du poids total du remplissage revêtu.
